# EUROPÄISCHE PATENTSCHRIFT

(11) **EP 1 500 874 B1**
(45) Veröffentlichungstag und Bekanntmachung des Hinweises auf die Patenterteilung: **30.12.2009**
(21) Anmeldenummer: 04006110.3
(22) Anmeldetag: 15.03.2004
(51) Int. Cl.: F23C 7/06, F23L 15/04

(54) **Brenneranordnung für ein Fahrzeugheizgerät**
Burner for vehicle heating device
Brûleur pour dispositif de chauffage pour véhicule

(30) Priorität: 21.07.2003 DE 10333115
(43) Veröffentlichungstag der Anmeldung: 26.01.2005
(73) Patentinhaber: J. Eberspächer GmbH & Co. KG, 73730 Esslingen (DE)
(72) Erfinder: Schmidt, Oliver, 73207 Plochingen (DE)
(74) Vertreter: Ruttensperger, Bernhard

(56) Entgegenhaltungen:
- EP-A- 0 078 876
- EP-A- 0 930 462
- DE-A1- 1 965 688
- DE-A1- 3 516 012
- JP-A- 59 219 610
- US-A- 4 480 986

## Beschreibung

Die vorliegende Erfindung betrifft eine Brenneranordnung für ein Fahrzeugheizgerät, umfassend eine Brennkammer sowie eine Verbrennungsluftzuführanordnung zum Einleiten von Verbrennungsluft in die Brennkammer.

Bei derartigen Brenneranordnungen für Fahrzeugheizgeräte, die beispielsweise als Standheizungen oder Zuheizer betrieben werden, ist ein im Betrieb auftretendes Problem die Erzeugung von schädlichen Verbrennungsprodukten. Diese können einerseits zu einer erhöhten Schadstoffemission führen, was möglicherweise eine nachträgliche Schadstoffreinigung erforderlich macht, können andererseits aber auch zu Ablagerungen im Bereich der Brenneranordnung selbst führen, was deren Betriebscharakteristik und Betriebslebensdauer beeinträchtigen kann.

Aus der EP 0 930 462 A2 ist ein Brenner mit einem zur Aufnahme von aus einer Brennerdüse abgegebenem Brennstoff ausgebildeten Flammrohr vorgesehen. Der Brennstoff tritt zusammen mit einem nicht vorerwärmten Teil der Verbrennungsluft in einem Bodenbereich einer in dem Flammrohr begrenzten Brennkammer ein. Ein weiterer Teil der Verbrennungsluft strömt zunächst an der Außenseite eines das Flammrohr umgebenden hülsenartigen Trennelements entlang, wird dann axial umgelenkt und strömt dann zwischen dem Trennelement und der Außenseite des Flammrohrs zurück, so dass diese Verbrennungsluft durch das Flammrohr erwärmt durch Durchtritte hindurch in den Innenvolumenbereich des Flammrohrs gelangen kann.

Es ist die Aufgabe der vorliegenden Erfindung, eine Brenneranordnung für ein Fahrzeugheizgerät vorzusehen, bei welcher die Gefahr der Beeinträchtigung des Betriebs durch bei der Verbrennung entstehende Verbrennungsprodukte vermindert ist.

Erfindungsgemäß wird diese Aufgabe gelöst durch eine Brenneranordnung für ein Fahrzeugheizgerät gemäß Anspruch 1. Diese umfasst eine Brennkammer sowie eine Verbrennungsluftzuführanordnung zum Einleiten von Verbrennungsluft in die Brennkammer, wobei die Verbrennungsluftzuführanordnung eine Verbrennungsluftwärmetauscheranordnung zum Übertragen von bei Verbrennung entstehender Wärme auf wenigstens einen Teil der in die Brennkammer einzuleitenden Verbrennungsluft umfasst.

Durch das Vorwärmen wenigstens eines Teils der zusammen mit Brennstoff zu verbrennenden Verbrennungsluft wird erreicht, dass einerseits die Verbrennung selbst bereits in optimierter Art und Weise ablaufen kann, was andererseits die Gefahr der Entstehung eines übermäßigen Anteils schädlicher Emissionen mindert. Infolgedessen ist auch die Gefahr der Ablagerung von Rußpartikeln o.dgl. insbesondere an kritischen Bereichen gemindert. Auch führt insbesondere bei Brenneranordnungen, bei welchen der Brennstoff durch Verdampfung in die Brennkammer geleitet wird, die Vorwärmung der Verbrennungsluft zu einer verbesserten und vergleichmäßigten Brennstoffabdampfung. Weiterhin wird durch das Anströmen mit erwärmter Luft die Möglichkeit geschaffen, Brennstoffablagerungen, die sich einmal gebildet haben, im Verbrennungsbetrieb wieder abzutragen.

Um in den Verbrennungsprodukten transportierte Wärme auf die Verbrennungsluft selbst übertragen zu können, wird vorgeschlagen, dass die Verbrennungsluftwärmetauscheranordnung einen von der zu erwärmenden Verbrennungsluft durchströmbaren und von den Verbrennungsprodukten wenigstens bereichsweise umströmbaren Verbrennungsluftströmungsraum umfasst. Hierzu kann beispielsweise vorgesehen sein, dass der Verbrennungsluftströmungsraum unter Mitwirkung einer in Verbrennungsproduktströmungsrichtung stromabwärts der Brennkammer angeordneten Flammblende begrenzt ist. Alternativ oder zusätzlich ist es auch möglich, dass der Verbrennungsluftströmungsraum unter Mitwirkung eines in Verbrennungsproduktströmungsrichtung stromabwärts der Brennkammer angeordneten Flammrohrs begrenzt ist, wobei vorzugsweise vorgesehen sein kann, dass das Flammrohr im Wesentlichen zylindrisch ausgebildet ist und mit wenigstens einem weiteren im Wesentlichen zylindrischen Element den Verbrennungsluftströmungsraum begrenzt.

Die vorangehenden Aspekte zeigen also, dass die Prinzipien der vorliegenden Erfindung vor allem auch unter Miteinbeziehung bereits bei Brenneranordnungen allgemein vorhandener Bauteile realisiert werden können, so dass auch keine wesentlichen baulichen Verkomplizierungen auftreten.

Weiter ist bei der erfindungsgemäßen Brenneranordnung ein Brennkammergehäuse vorgesehen, welches mit einer Außenumfangswandung und einer Bodenwandung die Brennkammer begrenzt, wobei die Verbrennungsluftzuführanordnung einen ersten Verbrennungsluftzuführbereich umfasst zum Einleiten von in der Verbrennungsluftwärmetauscheranordnung erwärmter Verbrennungsluft in das Brennkammergehäuse. Weiter ist vorgesehen, dass der erste Verbrennungsluftzuführbereich in eine Zündorganaufnahmeöffnung einmündet. Dies ist insbesondere daher von Vorteil, da dann in demjenigen Bereich, in welchem die anfängliche Zündung auftreten wird, verstärkt bereits erwärmte Luft zur Verfügung gestellt wird, so dass auch in der Startphase der Schadstoffausstoß gemindert werden kann und auch die Gefahr der Ablagerung von Verbrennungsrückständen gemindert werden kann.

Zur Einstellung definierter Temperaturverhältnisse ist weiterhin vorgesehen, dass die Verbrennungsluftzuführanordnung einen zweiten Verbrennungsluftzuführbereich umfasst zum Einleiten nicht in der Verbrennungsluftwärmetauscheranordnung erwärmter Verbrennungsluft in das Brennkammergehäuse. Hierzu wird vorgeschlagen, dass der zweite Verbrennungsluftzuführbereich wenigstens eine in der Bodenwandung oder/und einem daran vorgesehenen Verbrennungsluftzufuhrstutzen ausgebildete Verbrennungsluftzuführöffnung umfasst.

Die vorliegende Erfindung wird nachfolgend mit Bezug auf die beiliegenden Zeichnungen beschrieben. Es zeigt:
- Fig. 1: eine Längsschnittansicht einer Brenneranordnung;
- Fig. 2: eine der Fig. 1 entsprechende Ansicht einer alternativen Ausgestaltungsform;
- Fig. 3: eine Schnittansicht der Brenneranordnung der Fig. 2, geschnitten längs einer Linie III-III;
- Fig. 4: eine weitere der Fig. 1 entsprechende Ansicht einer alternativen Ausgestaltungsform;
- Fig. 5: eine weitere der Fig. 1 entsprechende Ansicht einer alternativen Ausgestaltungsform;
- Fig. 6: eine Schnittansicht einer weiteren alternativen Ausgestaltungsform;
- Fig. 7: eine Schnittansicht einer weiteren alternativen Ausgestaltungsform;
- Fig. 8: eine weitere der Fig. 1 entsprechende Darstellung, welche die Einleitung der erwärmten Verbrennungsluft in die Brennkammer veranschaulicht;
- Fig. 9: eine der Fig. 8 entsprechende Ansicht einer weiteren alternativen Ausgestaltungsform;
- Fig. 10: eine teilweise geschnittene Axialansicht, welche eine erfindungsgemäße Art der Verbrennungslufteinleitung darstellt.

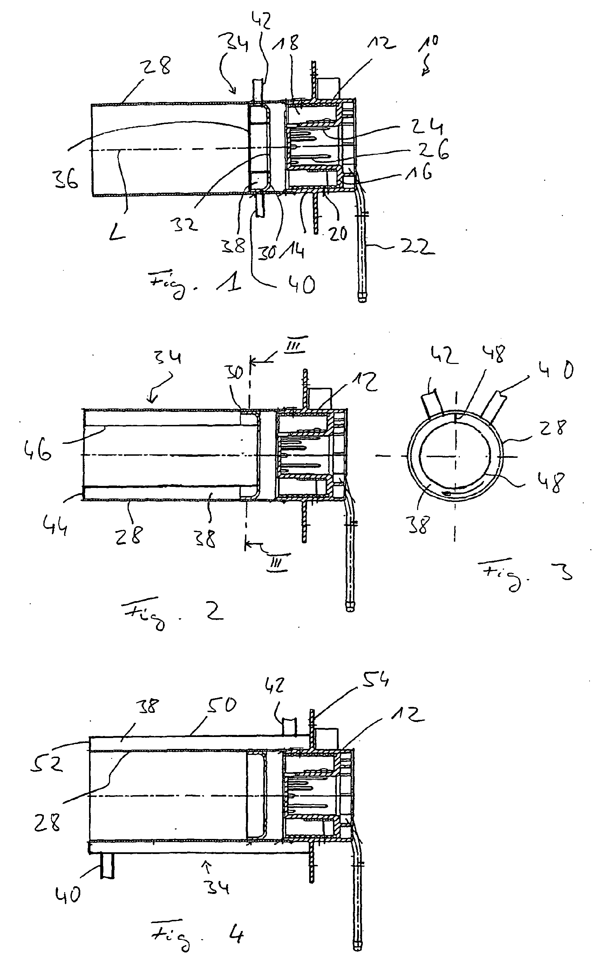

In Fig. 1 ist eine Brenneranordnung allgemein mit 10 bezeichnet. Diese Brenneranordnung 10 umfasst ein Brennkammergehäuse 12, das mit einer Außenwandung 14 und einer Bodenwandung 16 eine Brennkammer 18 in axialer Richtung, also einer Richtung bezogen auf eine Längsachse L der Brenneranordnung 10, sowie nach radial außen begrenzt. An der Außenumfangswandung 14 ist an der der Brennkammer 18 zugewandten Seite ein poröses Verdampfermedium 20 vorgesehen, in welches über eine Brennstoffzuführleitung 22 flüssiger Brennstoff eingeleitet werden kann, um diesen durch Kapilarwirkung zu verteilen und zur Brennkammer 18 hin abzudampfen. Es ist ferner an der Bodenwandung 16 ein sich im Wesentlichen axial und beispielsweise konzentrisch zur Außenumfangswandung 14 erstreckender Verbrennungslufteinlassstutzen 24 vorgesehen, welcher eine Mehrzahl von Verbrennungslufteintrittsöffnungen 26 aufweist. Durch diese Öffnungen 26 strömt ein Teil der zur Verbrennung mit dem abgedampften Brennstoff genutzten bzw. erforderlichen Verbrennungsluft, gefördert durch ein Verbrennungsluftgebläse, in die Brennkammer 18. An der axial offenen Seite der Brennkammer 18 ist das Brennkammergehäuse 12 bzw. die Außenumfangswandung 14 desselben mit einem langgestreckten, im Wesentlichen zylindrisch ausgestalteten Flammrohr 28 verbunden. In dem der Brennkammer 18 nahen Endbereich ist in diesem Flammrohr 28 eine Flammblende 30 vorgesehen, die eine zentrale Öffnung 32 zum Durchtritt der Verbrennungsprodukte aufweist.

Bei der Brenneranordnung 10 ist weiterhin eine Verbrennungsluftwärmetauscheranordnung 34 vorgesehen. Diese ist in der in Fig. 1 dargestellten Ausgestaltungsform im Wesentlichen gebildet durch das die Flammblende 30 bereitstellende ringförmige Bauteil und ein weiteres komplementäres ringförmiges Bauteil 36, das zusammen mit der Flammblende 30 einen beispielsweise konzentrisch zur Längsachse L angeordneten Verbrennungsluftströmungsraum 38 mit ringartiger Kontur begrenzt. Über einen Verbrennungslufteinlass 40 wird ein weiterer Teil der in die Brennkammer 18 einzuleitenden Verbrennungsluft in diese Verbrennungsluftwärmetauscheranordnung 34 eingeleitet. Über einen Verbrennungsluftauslass 42 verlässt die erwärmte Verbrennungsluft dann die Verbrennungsluftwärmetauscheranordnung 34 und wird in die Brennkammer 18 eingespeist. Dies kann an dafür vorgesehenen speziellen Bereichen erfolgen, wie nachfolgend noch beschrieben, kann aber auch in der Art und Weise erfolgen, dass diese vorerwärmte Verbrennungsluft mit der nicht erwärmten Verbrennungsluft vor oder nach dem Verbrennungsluftgebläse gemischt wird und über den Verbrennungslufteinlassstutzen 24 dann in die Brennkammer 18 eingeleitet wird.

In der Verbrennungsluftwärmetauscheranordnung 34 wird zumindest ein Teil der zur Verbrennung genutzten Luft vorerwärmt, und zwar unter Ausnutzung der bei der Verbrennung in der Brennkammer 18 selbst erzeugten Wärme. Während also diese zu erwärmende Verbrennungsluft den Verbrennungsluftströmungsraum 38 durchströmt, umströmen die Verbrennungserzeugnisse mit vergleichsweise hoher Temperatur diese Verbrennungsluftwärmetauscheranordnung 34, so dass ein Teil der in den Verbrennungsprodukten transportierten Wärme auf die in dem Verbrennungsluftströmungsraum strömende Luft übertragen wird.

Durch das Erwärmen zumindest eines Teils der Verbrennungsluft vor Einspeisung in die Brennkammer wird dafür gesorgt, dass das zu verbrennende Luft/Brennstoff-Gemisch bereits eine erhöhte Temperatur aufweist. Die Folge davon ist, dass die Verbrennung mit geringerer Schadstoffbildung abläuft und dass die Gefahr von Brennstoffablagerungen im Bereich der Brenneranordnung 10 gemindert wird. Auch können durch gezieltes Anströmen mit der bereits vorerwärmten Verbrennungsluft bereits vorhandene Ablagerungen im Verbrennungsbetrieb wieder abgetragen werden.

Nachfolgend werden verschiedene Variationsmöglichkeiten der Brenneranordnung beschrieben. Der grundsätzliche Aufbau der Brenneranordnung 10 ist so wie mit Bezug auf die Fig. 1 detailliert beschrieben, so dass im Folgenden nur auf die bestehenden Unterschiede eingegangen wird.

In Fig. 2 ist eine Ausgestaltungsform gezeigt, bei welcher die Verbrennungsluftwärmetauscheranordnung 34 auch unter Mitwirkung des Flammrohrs 28 als eine den Verbrennungsluftströmungsraum 38 nach radial außen begrenzende Baugruppe gebildet ist. Die Flammblende 30 und ein ringartiger Abschlussabschnitt 44 begrenzen den Verbrennungsluftströmungsraum 38 in axialer Richtung, während ein weiteres im Wesentlichen zylindrisches Bauteil 46 die Abgrenzung nach radial innen hin bereitstellt. Wie in der Fig. 3 dargestellt, können wieder ein Verbrennungslufteinlass 40 und ein Verbrennungsluftauslass 42 vorgesehen sein, die im Prinzip an beliebiger bzw. passender Stelle positioniert werden können. Es kann zusätzlich im Verbrennungsluftströmungsraum 38 ein Unterteilungselement 48 vorgesehen sein, welches dafür sorgt, dass zwangsweise ein langer Strömungsweg vom Einlass 40 zum Auslass 42 durchströmt werden muss.

Bei der in Fig. 4 gezeigten Ausgestaltungsvariante begrenzt das Flammrohr 28 den Verbrennungsluftströmungsraum 38 nach radial innen, während ein zusätzliches zylindrisches Bauteil 50 das Flammrohr 28 und einen Teil des Brennkammergehäuses 12 radial außen umgibt und somit auch den Verbrennungsluftströmungsraum 38 nach radial außen begrenzt. Der axiale Abschluss ist wieder durch einen ringartigen Abschlussabschnitt 52 einerseits und einen am Brennkammergehäuse 12 vorgesehenen nach radial außen greifenden Flanschbereich 54 andererseits realisiert. Auch hier können wieder ein Einlass 40 und ein Auslass 42 für die zu erwärmende Verbrennungsluft vorgesehen sein, wobei die Positionierung so sein kann, dass zwangsweise durch vergleichsweise weit auseinander liegende Positionierung ein langer Strömungsweg und somit eine lange Wechselwirkungsstrecke für die zu erwärmende Verbrennungsluft vorgesehen ist.

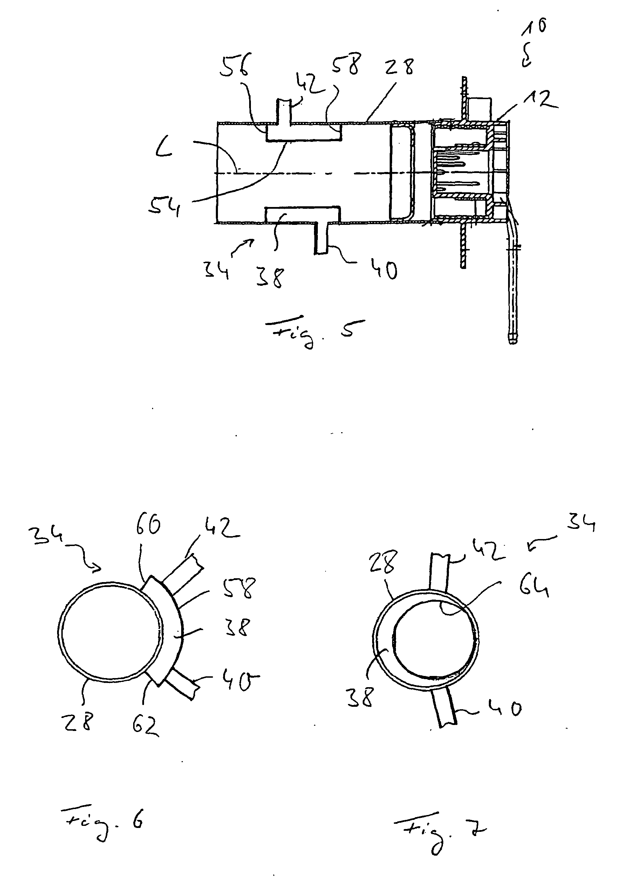

In Fig. 5 ist eine Variante gezeigt, bei welcher wieder ein Abschnitt des Flammrohrs 28 den Verbrennungsluftströmungsraum 38 nach radial außen begrenzt, während ein im Wesentlichen zylindrisches Bauteil 54 für den Abschluss nach radial innen sorgt. An diesem zylindrischen Bauteil 54 können integral vorgesehen zwei ringartige Abschlussabschnitte 56, 58 vorhanden sein, die den axialen Abschluss des Verbrennungsluftströmungsraums realisieren. Um bei dieser Ausgestaltungsform eine möglichst gleichmäßige Durchströmung des Flammrohrs 28 mit den Verbrennungsprodukten bereitzustellen, ist vorzugsweise das Bauteil 54 mit den Abschlussabschnitten 56, 58 sich vollständig ringartig um die Längsachse L erstreckend ausgestaltet.

In Fig 6 ist eine Ausgestaltungsform gezeigt, bei welcher das Flammrohr 28 den Verbrennungsluftströmungsraum 38 mit einem Abschnitt nach radial innen begrenzt, während radial außen ein zylindersegmentartiges Bauteil 58 vorgesehen ist, das mit Umfangsendsegmenten 60, 62 und nicht dargestellten Axialendsegmenten dann den Verbrennungsluftströmungsraum 38 abschließt. Da hier eine weitergehende Auswirkung auf die Verbrennungsproduktströmung im Flammrohr 28 nicht vorhanden ist, ist es ohne weiteres möglich, nur ein Umfangssegment des Flammrohrs 28 zur Wärmeübertragung zu nutzen.

Bei der in Fig. 7 dargestellten Ausgestaltungsvariante ist innerhalb des Flammrohrs 28 ein weiteres zylindrisches Bauteil 64 vorgesehen, das beispielsweise sich entlang der gesamten Länge des Flammrohrs 28 erstreckend ausgebildet ist, bezüglich des Flammrohrs 28 und der Längsmittenachse L aber nicht konzentrisch, sondern exzentrisch angeordnet ist. Es ergibt sich somit ein entsprechend nicht kreisringartig ausgestalteter Verbrennungsluftströmungsraum 38, sondern, im Extremfall, ein Verbrennungsluftströmungsraum mit sichelartigem Querschnitt.

Es sei darauf hingewiesen, dass selbstverständlich bei allen vorangehend beschriebenen Ausgestaltungsformen in dem Verbrennungsluftströmungsraum 38 Ablenkelemente oder Ablenkbereiche vorgesehen sein können, um dafür zu sorgen, dass die diesen durchströmende und zu erwärmende Verbrennungsluft einen möglichst langen Strömungsweg durchlaufen muss.

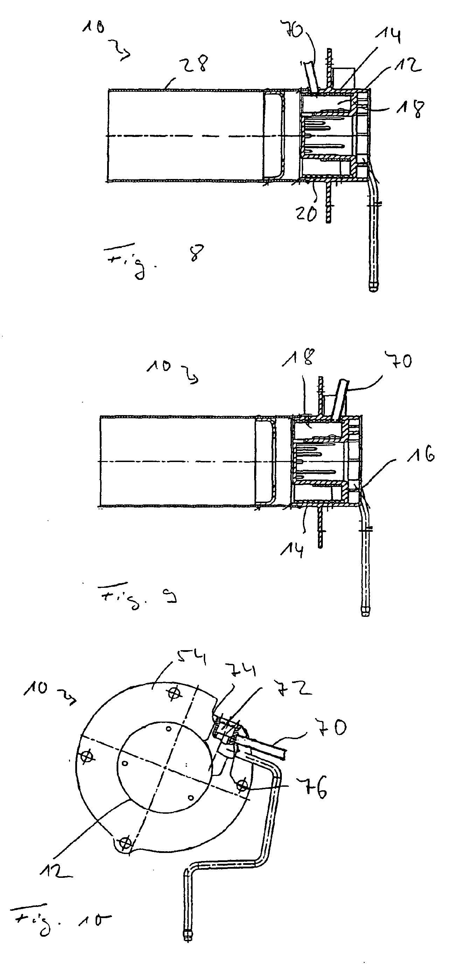

Mit Bezug auf die Fig. 1 wurde bereits beschrieben, wie die erwärmte Verbrennungsluft in die Brennkammer 18 eingeleitet werden kann. Eine nicht erfindungsgemäße Möglichkeit hierfür ist in Fig. 8 gezeigt, wobei es selbstverständlich ist, dass die hier nicht weiter dargestellte Verbrennungsluftwärmetauscheranordnung so ausgebildet sein kann, wie vorangehend beschrieben.

Man erkennt an dem Brennkammergehäuse 12 der Fig. 8 einen Verbrennungslufteinlassanschluss 70, der die Außenumfangswandung 14 durchsetzt und beispielsweise in das poröse Verdampfermedium 20 einmündet oder ggf. auch dieses noch durchsetzt, so dass er zur Brennkammer 18 hin offen ist. Während bei der in Fig. 8 dargestellten Variante der Verbrennungslufteinlassanschluss 70 an dem zum Flammrohr 28 nahe liegenden Endbereich der Brennkammer 18 vorgesehen ist, ist bei der in Fig. 8 dargestellten Variante der Einlassanschluss 70 in dem der Bodenwandung 16 nahe liegenden Bereich der Außenumfangswandung 14 vorgesehen.

Es ist selbstverständlich, dass hier an mehreren Positionen in axialer Richtung oder auch in Umfangsrichtung verteilt derartige Einlassanschlüsse 70 vorgesehen sein können, um die erwärmte Verbrennungsluft bzw. den erwärmten Teil der Verbrennungsluft an definierten und beispielsweise gleichmäßig verteilten Positionen in die Brennkammer 18 einleiten zu können.

Eine erfindungsgemäße Möglichkeit der Einleitung ist in Fig. 10 gezeigt. Man erkennt hier schematisch ein in der Umfangswandung 14 vorgesehenes bzw. in diese eingesetztes und sich beispielsweise radial oder sekantial in die Brennkammer 18 erstreckendes Zündorgan 72. Auch dieses kann von einem porösen Verdampfermedium 74 umgeben sein. Der bei der Variante der Fig. 10 vorgesehene Verbrennungslufteinlassanschluss 70 mündet in einen Volumenbereich ein, in dem sich das Zündorgan 72 erstreckt, also beispielsweise eine so genannte Zündkammer 76. Auf diese Art und Weise kann dafür gesorgt werden, dass insbesondere in der Anfangsphase der Verbrennung, also einer Phase, in welcher zwar durch bereits startende Verbrennung Wärme erzeugt wird und auf die Verbrennungsluft übertragen werden kann, gleichwohl aber auch durch Erregen des Zündorgans noch dafür gesorgt wird, dass lokal sehr hohe und das Anlaufen der Verbrennung unterstützende Temperaturen bereitgestellt werden, in diesem insbesondere hinsichtlich der Erzeugung von Schadstoffen und Ablagerungen kritischen Bereich verbesserte Verbrennungsbedingungen durch Einleiten der erwärmten Verbrennungsluft bereitgestellt werden können.

Es ist selbstverständlich, dass für die zu erwärmende Verbrennungsluft ein separates Verbrennungsluftgebläse vorgesehen sein kann, um durch definierte Einstellung dieser Strömung den Anteil von erwärmter und nicht erwärmter Luft vorgeben zu können. Auch kann der zu erwärmende Teil der Verbrennungsluft durch das auch für die nicht zu erwärmende Verbrennungsluft vorgesehene Gebläse gefördert werden, wobei dann durch eine Ventilanordnung oder einstellbare Abzweigungsanordnung dafür gesorgt wird, dass ein bestimmter Teil der Verbrennungsluft vorerwärmt wird. Weiterhin ist es selbstverständlich möglich, durch Vorgabe entsprechender Strömungsbereiche ein fest definiertes Verhältnis von zu erwärmender und nicht zu erwärmender Verbrennungsluft bereitzustellen.

## Patentansprüche

1. Brenneranordnung für ein Fahrzeugheizgerät, umfassend eine Brennkammer (18) sowie eine Verbrennungsluftzuführanordnung zum Einleiten von Verbrennungsluft in die Brennkammer (18), wobei die Verbrennungsluftzuführanordnung eine Verbrennungsluftwärmetauscheranordnung (34) zum Übertragen von bei Verbrennung entstehender Wärme auf wenigstens einen Teil der in die brennkammer (18) einzuleitenden Verbrennungsluftumfasst, **dadurch gekennzeichnet, dass** ein Brennkamergehäuse (12) vorgesehen ist, welches mit einer Außenumfangswandung (14) und einer Bodenwandung (16) die Brennkammer (18) begrenzt, wobei die Verbrennungsluftzuführanordnung (34) einen ersten Verbrennungsluftzuführbereich (70) umfasst zum Einleiten von in der Verbrennungsluftwärmetauscheranordnung(34)erwärmterVerbrennungsluftin das Brennkammergehäuse (12), wobei der erste Verbrennungsluftzuführbereich (70) in eine Zündorganaufnahmeöffnung einmündet, und wobei die Verbrennungsluftzuführanordnung einen zweiten Verbrennungsluftzuführbereich (24) umfasst zum Einleiten nicht in der Verbrennungsluftwärmetauscheranordnung (34) erwärmter Verbrennungsluft in das Brennkammergehäuse (12).

2. Brenneranordnung nach Anspruch 1,
**dadurch gekennzeichnet, dass** die Verbrennungsluftwärmetauscheranordnung (34) einen von der zu erwärmenden Verbrennungsluft durchströmbaren und von den Verbrennungsprodukten wenigstens bereichsweise umströmbaren Verbrennungsluftströmungsraum (38) umfasst.

3. Brenneranordnung nach Anspruch 2,
**dadurch gekennzeichnet, dass** der Verbrennungsluftströmungsraum (38) unter Mitwirkung einer in Verbrennungsproduktströmungsrichtung stromabwärts der Brennkammer (18) angeordneten Flammblende (30) begrenzt ist.

4. Brenneranordnung nach Anspruch 2 oder 3,
**dadurch gekennzeichnet, dass** der Verbrennungsluftströmungsraum (38) unter Mitwirkung eines in Verbrennungsproduktströmungsrichtung stromabwärts der Brennkammer (18) angeordneten Flammrohrs (28) begrenzt ist.

5. Brenneranordnung nach Anspruch 4,
**dadurch gekennzeichnet, dass** das Flammrohr (28) im Wesentlichen zylindrisch ausgebildet ist und mit wenigstens einem weiteren im Wesentlichen zylindrischen Element (46; 50; 58; 64) den Verbrennungsluftströmungsraum (38) begrenzt.

6. Brenneranordnung nach einem der Ansprüche 1 bis 5,
**dadurch gekennzeichnet, dass** der zweite Verbrennungsluftzuführbereich (24) wenigstens eine in der Bodenwandung (16) oder/und einem daran vorgesehenen Verbrennungsluftzufuhrstutzen (24) ausgebildete Verbrennungsluftzuführöffnung (26) umfasst.

## Claims

1. Burner arrangement for a vehicle heating device, comprising a combustion chamber (18) as well as a combustion air supply arrangement for inserting combustion air into said combustion chamber (18), the combustion air supply arrangement comprising a combustion air heat exchanger arrangement (34) for transferring heat produced during combustion to at least part of the combustion air to be inserted into the combustion chamber (18), **characterized by** a combustion chamber housing (12) being provided, defining the combustion chamber (18) by means of an outer circumferential wall (14) and a bottom wall (16), the combustion air supply arrangement comprising a first combustion air supply section (70) for inserting combustion air heated in the combustion air heat exchanger arrangement (34) into the combustion chamber housing (12), the first combustion air supply section (70) leading into an ignition element receiving opening and the combustion air supply arrangement comprising a second combustion air supply section (24) for inserting combustion air that has not been heated in the combustion air heat exchanger arrangement (34) into the combustion chamber housing (12).

2. Burner arrangement according to claim 1,
**characterized in** the combustion air heat exchanger arrangement (34) comprising a combustion air flow space (38) through which the combustion air to be inserted may flow and around which combustion products may flow at least partially.

3. Burner arrangement according to claim 2,
**characterized in** the combustion air flow space (38) being defined with an associated flame aperture (30) located downstream of the combustion chamber (18) in the flow direction of combustion products.

4. Burner arrangement according to claim 2 or 3,
**characterized in** the combustion air flow space (38) being defined with an associated flame tube (28) located downstream of the combustion chamber (18) in the flow direction of combustion products.

5. Burner arrangement according to claim 4,
**characterized in** the flame tube (28) being designed substantially cylindrical and defining the combustion air flow space (38) together with at least one further substantially cylindrical element (46; 50; 58; 64).

6. Burner arrangement according to one of claims 1 to 5,
**characterized in** the second combustion air supply section (24) comprising at least one combustion air supply opening (26) formed in the bottom wall (16) or/and in a combustion air supply adaptor (24) provided therein.

## Revendications

1. Arrangement de brûleur pour un appareil de chauffage d'un véhicule, comprenant une chambre de combustion (18) ainsi qu'un arrangement d'alimentation en air de combustion pour insérer de l'air de combustion dans la chambre de combustion (18), l'arrangement d'alimentation en air de combustion comprenant un arrangment d'échangeur de chaleur de l'air de combustion (34) pour transférer la chaleur produite lors de la combustion à au moins une partie de l'air à insérer dans la chambre de combustion (18), **caractérisé par** un boîtier de chambre de combustion (12) étant prévu, délimitant la chambre de combustion (18) par un paroi circonférentiel extérieur (14) et un paroi de fond (16), l'arrangement d'alimentation en air de combustion (34) comprenant une première section d'alimentation en air de combustion (70) pour insérer l'air de combustion chauffé dans l'arrangment d'échangeur de chaleur de l'air de combustion (34) dans le boîtier de chambre de combustion (12), la première section d'alimentation en air de combustion (70) débouchant sur une ouverture de réception d'un élément d'allumage et l'arrangement d'alimentation en air de combustion comprenant une deuxième section d'alimentation en air de combustion (24) pour insérer l'air de combustion non pas chauffé dans l'arrangment d'échangeur de chaleur de l'air de combustion (34) dans le boîtier de chambre de combustion (12).

2. Arrangement de brûleur selon la revendication 1,
**caractérisé par** l'arrangment d'échangeur de chaleur de l'air de combustion (34) comprenant un espace d'écoulement d'air de combustion (38) à travers lequel l'air de combustion à chauffer peut s'écouler et autour duquel les produits de combustion peuvent s'écouler au moins en partie.

3. Arrangement de brûleur selon la revendication 2,
**caractérisé par** l'espace d'écoulement d'air de combustion (38) étant délimité entre autre avec le concours d'un obturateur de flamme (30) disposé en aval de la chambre de combustion (18) dans la direction du flux des produits de combustion.

4. Arrangement de brûleur selon la revendication 2 ou 3,
**caractérisé par** l'espace d'écoulement d'air de combustion (38) étant délimité entre autre avec le concours d'un tube de flamme (28) disposé en aval de la chambre de combustion (18) dans la direction du flux des produits de combustion.

5. Arrangement de brûleur selon la revendication 4,
**caractérisé par** le tube de flamme (28) étant formé essentiellement cylindriquement et délimitant l'espace d'écoulement d'air de combustion (38) avec au moins un autre élément essentiellement cylindrique (46; 50; 58; 64).

6. Arrangement de brûleur selon une des revendications 1 à 5,
**caractérisé par** la deuxième section d'alimentation en air de combustion (24) comprenant au moins une ouverture d'alimentation en air de combustion (26) formée dans le paroi de fond (16) ou/et dans un manchon d'alimentation en air de combustion (24) prévu dans ce dernier.
